# EUROPÄISCHE PATENTSCHRIFT

(11) **EP 0 955 003 B1**
(45) Veröffentlichungstag und Bekanntmachung des Hinweises auf die Patenterteilung: **12.02.2003**
(21) Anmeldenummer: 99103845.6
(22) Anmeldetag: 27.02.1999
(51) Int. Cl.: A47L 9/20

(54) **Sauggerät für Reinigungszwecke**
Suction device for cleaning purposes
Aspirateur à des fins de nettoyage

(30) Priorität: 08.05.1998 DE 19820627
(43) Veröffentlichungstag der Anmeldung: 10.11.1999
(73) Patentinhaber: Alfred Kärcher GmbH & Co., 71364 Winnenden (DE)
(72) Erfinder: Stauss, Oliver, 71409 Schwaikheim (DE)
(74) Vertreter: Hoeger, Stellrecht & Partner

(56) Entgegenhaltungen:
- WO-A-97/19630
- US-A- 4 277 265
- US-A- 4 363 156

## Beschreibung

Die Erfindung betrifft ein Sauggerät für Reinigungszwecke mit einem Sammelbehälter, einer in diesen einmündenden Saugleitung, einem mit dem Sammelbehälter über einen Absaugkanal in Verbindung stehenden Saugaggregat, einem Filter im Strömungsweg vom Sammelbehälter zum Saugaggregat und mit einem Schließventil, welches eine den Saugkanal stromabwärts des Filters mit einer Fremdluftquelle verbindende Öffnung verschließt.

Ein solches Sauggerät ist beispielsweise aus der WO 97/19630 bekannt. Es ermöglicht eine automatische Abreinigung des Filters durch Beaufschlagung des Filters mit Fremdluft, beispielsweise Umgebungsluft, die das Filter entgegen der üblichen Saugströmungsrichtung durchströmt. Das Verschließen der Saugleitung baut bei diesem bekannten Sauggerät im Sammelbehälter einen Unterdruck auf, der ein Schließventil zur Umgebung hin öffnet, durch dieses geöffnete Schließventil kann Umgebungsluft durch das Filter in den Sammelbehälter einströmen.

Bei dem bekannten Gerät wird das Schließventil durch eine Feder in der Schließstellung gehalten und nur dann geöffnet, wenn ein erhöhter Unterdruck im Sammelbehälter aufgebaut ist. Während des Betriebes können derartige Unterdruckspitzen kurzzeitig auftreten, und dann besteht die Gefahr, daß das Schließventil unerwünschterweise geöffnet wird, so daß die Saugleistung des Saugaggregates dadurch vermindert wird.

Es ist Aufgabe der Erfindung, ein gattungsgemäßes Sauggerät so auszubilden, daß nur unter genau definierten Arbeitsbedingungen eine Öffnung des Schließventils erfolgt, so daß nur dann Fremdluft auf das Filter auftrifft, wenn es vom Benutzer gewünscht wird.

Diese Aufgabe wird bei einem Sauggerät der eingangs beschriebenen Art erfindungsgemäß dadurch gelöst, daß ein Ventilkörper des Schließventils durch eine Magnethalterung in der Schließstellung des Schließventils gehalten ist und gegen die Wirkung der Magnethalterung in die Öffnungsstellung bewegbar ist.

Dadurch ergibt sich eine sichere Fixierung des Ventilkörpers in der Schließstellung, so daß im normalen Betrieb durch kurzzeitige Unterdruckspitzen keine Öffnung des Schließventiles erfolgt. Nur dann, wenn im Sammelbehälter tatsächlich der gewünschte starke Unterdruck auftritt, beispielsweise durch Verschließen der Saugleitung, erfolgt gegen die Wirkung der Magnethalterung eine Öffnung des Ventilkörpers, und zwar schlagartig, so daß nach einer einmal erfolgten Öffnung diese auch beibehalten wird, jede Gefahr eines Flatterns des Ventilkörpers wird mit Sicherheit ausgeschlossen.

Vorzugsweise kann die Magnethalterung mindestens einen Permanentmagneten umfassen.

Insbesondere kann vorgesehen sein, daß die Magnethalterung zwei sich anziehende Magneten umfaßt, von denen einer am Ventilkörper und der andere an einem gerätefesten Teil gehalten ist, an dem ein Ventilsitz für den Ventilkörper ausgebildet ist.

Günstig ist es weiterhin, wenn der Ventilkörper durch eine Feder mit einer Schließkraft beaufschlagt ist. Diese Feder bewegt den Ventilkörper aus der Öffnungsstellung in die Schließstellung zurück, sobald der Unterdruck im Sammelbehälter abgebaut ist, in der Schließstellung selbst erfolgt dann eine sichere Fixierung des Ventilkörpers einmal durch diese Feder und zum anderen ganz wesentlich durch die Magnethalterung.

Eine günstige Arbeitsweise ergibt sich insbesondere dann, wenn die Kraft der Magnethalterung und gegebenenfalls der Feder so gewählt ist, daß der Ventilkörper bei verschlossener Saugleitung und eingeschaltetem Saugaggregat durch die Druckdifferenz des Sammelbehälters gegenüber der Fremdluftquelle in seine Öffnungsstellung bewegt wird. In diesem Falle genügt es, die Saugleitung bewußt zu verschließen, beispielsweise mit der Hand, um eine Öffnung des Schließventils einzuleiten und damit die Abreinigung des Filters vorzunehmen.

Bei einer weiteren bevorzugten Ausführungsform ist vorgesehen, daß der Ventilkörper in seiner Öffnungsstellung gleichzeitig den Absaugkanal stromabwärts der Öffnung zur Fremdluftquelle verschließt. Damit ist sichergestellt, daß die durch das geöffnete Schließventil einströmende Fremdluft nicht dem Saugaggregat zugeführt wird, sondern tatsächlich das Filter beaufschlagt und abreinigt.

Bei einer besonders bevorzugten Ausführungsform ist vorgesehen, daß eine Öffnung im Strömungskanal im Abstand von einer zu der Öffnung hin offenen gerätefesten Haube überfangen ist, daß in dieser eine weitere zu der Öffnung hin offene Haube verschiebbar aufgenommen ist, deren Oberseite Durchbrechungen aufweist, daß die gerätefeste Haube einen ringförmigen Ventilsitz aufweist, an dem die verschiebbare Haube in ihrer angehobenen Stellung dichtend anliegt, daß die gerätefeste Haube innerhalb des Ventilsitzes mit der Fremdluftquelle verbunden ist und daß die Durchbrechungen in der Oberseite der verschiebbaren Haube außerhalb des Ventilsitzes angeordnet sind.

Es ist dabei vorteilhaft, wenn die verschiebbare Haube in ihrer Schließstellung zwischen ihrem unteren Rand und dem Sammelbehälter einen Zwischenraum freiläßt und in ihrer Öffnungsstellung diesen Zwischenraum verschließt, und wenn der die verschiebbare Haube umgebende Raum mit dem Saugkanal in Verbindung steht. Die verschiebbare Haube übernimmt in diesem Falle eine Doppelfunktion, einmal wirkt sie als Ventilkörper für das Schließventil zur Fremdluftquelle, zum anderen sperrt sie in der Öffnungsstellung den Saugkanal zum Saugaggregat ab und verhindert dadurch, daß die einströmende Fremdluft unmittelbar zum Saugaggregat strömt.

Günstig ist es, wenn die Magnethalterung in einem Zwischenraum zwischen der gerätefesten Haube und der verschiebbaren Haube angeordnet ist.

Das Filter kann ein Faltenfilter sein.

Die nachstehende Beschreibung bevorzugter Ausführungsformen der Erfindung dient im Zusammenhang mit der Zeichnung der näheren Erläuterung. Es zeigen:

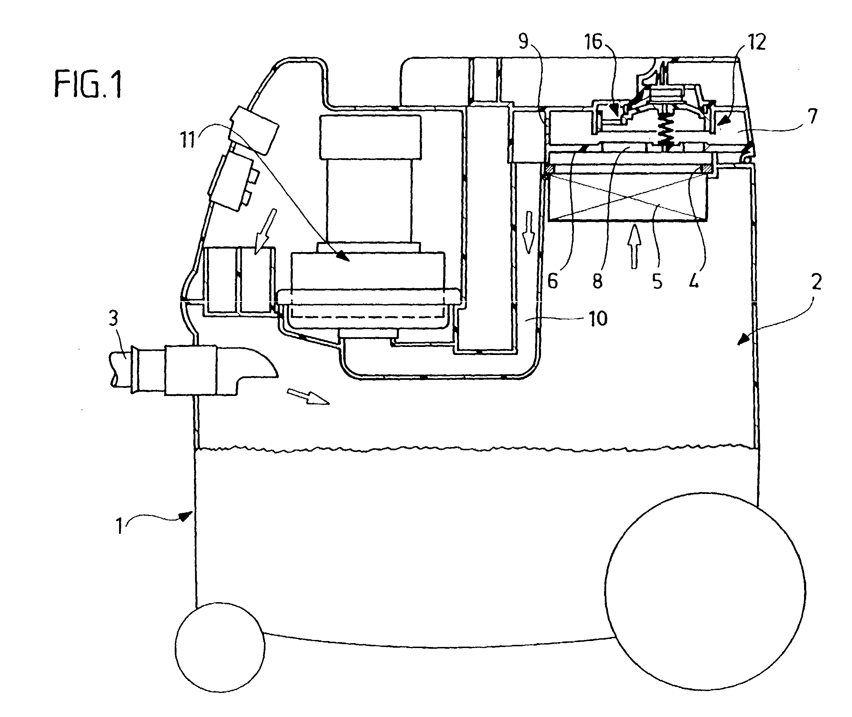

- Figur 1:: eine schematische Seitenansicht eines Sauggerätes;
- Figur 2:: eine vergrößerte Schnittansicht eines Fremdluftschließventils in der Schließstellung und
- Figur 3:: eine Ansicht ähnlich Figur 2 mit dem Schließventil in der Öffnungsstellung.

Das in der Zeichnung dargestellt Sauggerät umfaßt ein fahrbares Gestell 1 mit einem Sammelbehälter 2, in den eine Saugleitung 3 einmündet. An seiner Oberseite weist der Sammelbehälter 2 eine Öffnung 4 auf, die von einem abgedichtet in die Öffnung 4 eingesetzten Faltenfilter 5 verschlossen ist.

Die Öffnung 4 wird von einer Abdeckplatte 6 überfangen, die gleichzeitig den Boden einer geschlossenen Ventilkammer 7 ausbildet. Diese Ventilkammer 7 steht über eine Durchbrechung 8 mit der Öffnung 4 des Sammelbehälters 2 in Verbindung, außerdem über eine Öffnung 9 mit einem sich an die Ventilkammer 7 anschließenden Saugkanal 10, der zur Saugseite eines Saugaggregates 11 führt.

Die Oberseite der Ventilkammer 7 ist in ihrem die Durchbrechungen 8 überfangenden Bereich als nach unten offene Haube 12 ausgebildet, die mit ihrem unteren Rand 13 in die Ventilkammer 7 hineinragt und im Abstand von der Abdeckplatte endet. Über eine Durchbrechung 14 steht der Innenraum der Haube 12 mit der Umgebung in Verbindung. Die Haube 12 trägt an ihrer Innenseite eine nach unten abstehende, flexible Ringdichtung 15, die die Durchbrechung 14 außenseitig umgibt.

In der Haube 12 ist eine weitere nach unten hin offene Haube 16 höhenverschieblich gelagert, deren Oberseite 17 eine der Ringdichtung 15 der gerätefesten Haube 12 gegenüberliegende ringförmige Dichtfläche 18 aufweist. In einer angehobenen Stellung der verschiebbaren Haube 16 liegt diese Dichtfläche 18 dichtend an der Ringdichtung 15 an, diese Stellung der Haube 16 wird als Schließstellung bezeichnet.

Eine sich an der Haube 16 einerseits und an der Abdeckplatte 6 andererseits abstützende Schraubenfeder 19 beaufschlagt die Haube 16 mit einer Kraft, durch die diese in ihre Schließstellung verschoben wird.

An der Oberseite 17 der verschiebbaren Haube 16 ist in einem zentralen Bereich ein Permanentmagnet 20 angeordnet, dem an der Oberseite der gerätefesten Haube 12 ein dort festgelegter Permanentmagnet 21 gegenüberliegt. Diese Permanentmagneten 20 und 21 sind so gewählt, daß sie einander anziehen, so daß die verschiebbare Haube 16 durch die Permanentmagneten 20 und 21 in der Schließstellung zusätzlich gehalten wird.

Außerhalb der Dichtfläche 18 sind in der Oberseite der Haube 16 Durchbrechungen 22 angeordnet, so daß bei in Öffnungsstellung verschobener Haube 16 ein Strömungsweg aus der Umgebung durch die Durchbrechung 14 und die Durchbrechungen 22 geöffnet wird.

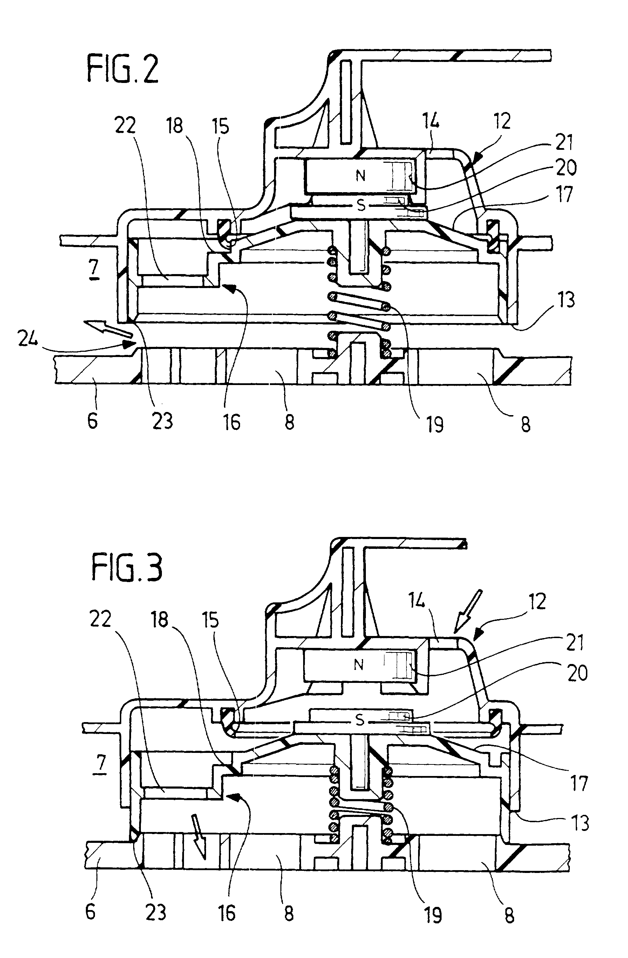

In ihrer Schließstellung ist der untere Rand 23 der verschiebbaren Haube 16 im Abstand von der Abdeckplatte 6 angeordnet (Figur 2), in ihrer Öffnungsstellung jedoch stützt sich die Haube 16 mit ihrem unteren Rand 23 auf der Abdeckplatte 16 ab und verschließt damit einen Ringspalt 24 zwischen dem unteren Rand 13 der gerätefesten Haube 12 einerseits und der Abdeckplatte 6 andererseits. Damit ist eine Strömungsverbindung aus dem Innenraum der Haube 16 zur Ventilkammer 7 unterbrochen.

Im normalen Betrieb befindet sich die verschiebbare Haube 16 in der Schließstellung. Das Saugaggregat kann dadurch über den Saugkanal 10, die Ventilkammer 7 und die durch das Faltenfilter 5 verschlossene Öffnung 4 hindurch Luft aus dem Sammelbehälter 2 ansaugen und damit auch über die Saugleitung 3.

Verschließt der Benutzer diese Saugleitung 3, so baut das Saugaggregat im Sammelbehälter 2 einen hohen Unterdruck auf, und dieser hohe Unterdruck führt dazu, daß die verschiebbare Haube 16 aus ihrer Schließstellung in die Öffnungsstellung verschoben wird. Die Druckdifferenz im Bereich der Haube 16 wird nämlich durch die starke Absenkung des Druckes im Sammelbehälter 2 so groß, daß die Haltekräfte durch die Permanentmagnete 20 und 21 und die Schraubenfeder 19 nicht mehr ausreichen, die Haube 16 in der Schließstellung halten. Die Öffnung erfolgt dabei schlagartig, da die die Haube 16 rücktreibende Kraft im wesentlichen nur noch durch die Schraubenfeder 19 gegeben ist, die Permanentmagneten 20 und 21 sind in der Öffnungsstellung der Haube 16 so weit voneinander entfernt, daß sie praktisch wirkungslos sind.

Gleichzeitig wird bei dieser Verschiebung der Haube 16 in ihre Öffnungsstellung der Ringspalt 24 verschlossen, so daß durch die Durchbrechung 14 eintretende Umgebungsluft über die Durchbrechungen 22 unmittelbar das Faltenfilter 5 beaufschlagen und abreinigen kann. Dieser Vorgang erfolgt solange, bis durch das Einströmen der Fremdluft der Unterdruck im Sammelbehälter 2 abgebaut ist und ein Druckausgleich eintritt. Sobald dies der Fall ist, wird die Haube 16 unter der Wirkung der Schraubenfeder 19 wieder in ihre Schließstellung verschoben. Bleibt die Saugleitung 3 weiterhin verschlossen, so wiederholt sich dieser Abreinigungsvorgang, wird die Saugleitung jedoch dann wieder geöffnet, kann mit dem Gerät in der üblichen Weise weitergearbeitet werden, wobei die Haube 16 dann in ihrer Schließstellung verbleibt und die Durchbrechung 14 zur Umgebung verschließt.

## Patentansprüche

1. Sauggerät für Reinigungszwecke mit einem Sammelbehälter (2), einer in diesen einmündenden Saugleitung (3), einem mit dem Sammelbehälter (2) über einen Absaugkanal (10) in Verbindung stehenden Saugaggregat (11), einem Filter im Strömungsweg vom Sammelbehälter (2) zum Saugaggregat (11) und mit einem Schließventil, welches eine den Saugkanal stromabwärts des Filters mit einer Fremdluftquelle verbindende Öffnung verschließt, **dadurch gekennzeichnet, daß** ein Ventilkörper (16) des Schließventils (15, 18) durch eine Magnethalterung (20, 21) in der Schließstellung des Schließventils (16) gehalten ist und gegen die Wirkung der Magnethalterung (20, 21) in die Öffnungsstellung bewegbar ist.

2. Sauggerät nach Anspruch 1, **dadurch gekennzeichnet, daß** die Magnethalterung (20, 21) mindestens einen Permanentmagneten umfaßt.

3. Sauggerät nach Anspruch 1 oder 2, **dadurch gekennzeichnet, daß** die Magnethalterung zwei sich anziehende Magnete (20, 21) umfaßt, von denen einer am Ventilkörper (16) und der andere an einem gerätefesten Teil (12) gehalten ist, an dem ein Ventilsitz (15) für den Ventilkörper (16, 18) ausgebildet ist.

4. Sauggerät nach einem der voranstehenden Ansprüche, **dadurch gekennzeichnet, daß** der Ventilkörper (16) durch eine Feder (19) mit einer Schließkraft beaufschlagt ist.

5. Sauggerät nach einem der voranstehenden Ansprüche, **dadurch gekennzeichnet, daß** die Kraft der Magnethalterung (20, 21) und gegebenenfalls der Feder (19) so gewählt ist, daß der Ventilkörper (16) bei verschlossener Saugleitung (2) und eingeschaltetem Saugaggregat (11) durch die Druckdifferenz des Sammelbehälters (2) gegenüber der Fremdluftquelle in seine Öffnungsstellung bewegt wird.

6. Sauggerät nach einem der voranstehenden Ansprüche, **dadurch gekennzeichnet, daß** der Ventilkörper (16) in seiner Öffnungsstellung gleichzeitig den Absaugkanal (7, 10) stromabwärts der Öffnung (14) zur Fremdluftquelle verschließt.

7. Sauggerät nach einem der voranstehenden Ansprüche, **dadurch gekennzeichnet, daß** eine Öffnung (8) im Strömungsweg im Abstand von einer zu der Öffnung (8) hin offenen gerätefesten Haube (12) überfangen ist, daß in dieser eine weitere zu der Öffnung (8) hin offene Haube (16) verschiebbar aufgenommen ist, deren Oberseite (17) Durchbrechungen (22) aufweist, daß die gerätefeste Haube (12) einen ringförmigen Ventilsitz (15) aufweist, an dem die verschiebbare Haube (16, 18) in ihrer angehobenen Stellung dichtend anliegt, daß die gerätefeste Haube (12) innerhalb des Ventilsitzes (15) mit der Fremdluftquelle verbunden ist und daß die Durchbrechungen (22) in der Oberseite (17) der verschiebbaren Haube (16) außerhalb des Ventilsitzes (15) angeordnet sind.

8. Sauggerät nach Anspruch 7, **dadurch gekennzeichnet, daß** die verschiebbare Haube (16) in ihrer Schließstellung zwischen ihrem unteren Rand (23) und dem Sammelbehälter (2) einen Zwischenraum (24) freiläßt und in ihrer Öffnungsstellung diesen Zwischenraum (24) verschließt, und daß der die verschiebbare Haue (16) umgebende Raum (7) mit dem Saugkanal (10) in Verbindung steht.

9. Sauggerät nach einem der Ansprüche 7 oder 8, **dadurch gekennzeichnet, daß** die Magnethalterung (20, 21) in einen Zwischenraum zwischen der gerätefesten Haube (12) und der verschiebbaren Haube (16) angeordnet ist.

10. Sauggerät nach einem der voranstehenden Ansprüche, **dadurch gekennzeichnet, daß** das Filter (5) ein Faltenfilter ist.

## Claims

1. A suction appliance for cleaning purposes, having a collecting container (2), a suction pipe (3) running into the latter, a suction unit (11) connected to the collecting container (2) via an suction channel (10), a filter in the flow path from the collecting container (2) to the suction unit (11) and having a closing valve which closes an opening connecting the suction channel downstream of the filter to a source of external air, **characterised in that** a valve body (16) of the closing valve (15, 18) is held in the closing position of the closing valve (16) by a magnetic holding device (20,21) and is movable into the opening position against the action of the magnetic holding device (20, 21).

2. A suction appliance according to claim 1, **characterised in that** the magnetic holding device (20, 21) comprises at least one permanent magnet.

3. A suction appliance according to claim 1 or 2, **characterised in that** the magnetic holding device comprises two mutually attracting magnets (20, 21), one of which is held on the valve body (16) and the other of which is held on a part (12), fast with the appliance, on which a valve seat (15) for the valve body (16, 18) is formed.

4. A suction appliance according to any one of the preceding claims, **characterised in that** the valve body (16) is acted upon with a closing force by a spring (19).

5. A suction appliance according to any one of the preceding claims, **characterised in that** the force of the magnetic holding device (20, 21) and optionally the spring (19) is selected such that when the suction pipe (2 [sic]) is closed and the suction unit (11) is switched on, the valve body (16) is moved into its opening position by the pressure difference between the collecting container (2) and the external air source.

6. A suction appliance according to any one of the preceding claims, **characterised in that** the valve body (16) in its opening position simultaneously closes the suction channel (7, 10), downstream of the opening (14) to the external air source.

7. A suction appliance according to any one of the preceding claims, **characterised in that** an opening (8) in the flow path is covered at a distance by a hood (12), fast with the appliance, open towards the opening (8), **in that** a further hood (16) open towards the opening (8) is displaceably accommodated in this hood (12), the upper side (17) of the displaceable hood (16) having openings (22), **in that** the hood (12) fast with the appliance has an annular valve seat (15) against which the displaceable hood (16, 18) rests in a sealing manner in its raised position, **in that** within the valve seat (15), the hood (12) fast with the appliance is connected to the external air source and **in that** the openings (22) in the upper side (17) of the displaceable hood (16) are arranged exterior to the valve seat (15).

8. A suction appliance according to claim 7, **characterised in that** the displaceable hood (16) frees in its closing position a space (24) between its lower edge (23) and the collecting container (2) and closes this space (24) in its opening position, and **in that** the chamber (7) surrounding the displaceable hood (16) is connected to the suction channel (10).

9. A suction appliance according to one of claims 7 and 8, **characterised in that** the magnetic holding device (20, 21) is arranged in a space between the hood (12), fast with the appliance, and the displaceable hood (16).

10. A suction appliance according to any one of the preceding claims, **characterised in that** the filter (5) is a folded filter.

## Revendications

1. Appareil aspirateur à des fins de nettoyage, comportant un récipient de collecte (2), une conduite de collecte (3) débouchant dans celui-ci, une unité d'aspiration (11) communiquant avec le récipient de collecte (2) via un canal d'aspiration (10), un filtre dans le chemin d'écoulement depuis le récipient de collecte (2) vers l'unité d'aspiration (11), et une valve d'obturation qui obture une ouverture reliant, en aval du filtre, le canal d'aspiration à une source d'air externe, **caractérisé en ce qu'**un corps de valve (16) de la valve d'obturation (15, 18) est maintenu dans la position d'obturation de la valve d'obturation (16) par une monture magnétique (20, 21) et peut être déplacé jusque dans la position d'ouverture à l'encontre de l'effet de la monture magnétique (20, 21).

2. Appareil aspirateur selon la revendication 1, **caractérisé en ce que** la monture magnétique (20, 21) comprend au moins un aimant permanent.

3. Appareil aspirateur selon l'une ou l'autre des revendications 1 et 2, **caractérisé en ce que** la monture magnétique comprend deux aimants (20, 21) qui s'attirent, dont l'un est maintenu sur le corps de valve (16) et dont l'autre est maintenu sur une pièce (12) solidaire de l'appareil sur laquelle est réalisé un siège de valve (15) pour le corps de valve (16, 18).

4. Appareil aspirateur selon l'une des revendications précédentes, **caractérisé en ce que** le corps de valve (16) est sollicité par une force de fermeture avec un ressort (19).

5. Appareil aspirateur selon l'une des revendications précédentes, **caractérisé en ce que** la force de la monture magnétique (20, 21) et le cas échéant celle du ressort (19) sont choisies telles que le corps de valve (16) est déplacé jusque dans sa position d'ouverture par la différence de pression du récipient de collecte (2) par rapport à la source d'air externe, lorsque la conduite d'aspiration (2) est fermée et que l'unité d'aspiration (11) est mise en marche.

6. Appareil aspirateur selon l'une des revendications précédentes, **caractérisé en ce que** dans sa position d'ouverture le corps de valve (16) obture simultanément le canal d'aspiration (7, 10) en aval de l'ouverture (14) par rapport à la source d'air externe.

7. Appareil aspirateur selon l'une des revendications précédentes, **caractérisé en ce qu'**une ouverture (8) dans le chemin d'écoulement est coiffée à distance par une coiffe (12) solidaire de l'appareil et ouverte vers l'ouverture (8), de sorte que dans ladite coiffe est reçue en déplacement une autre coiffe (16) ouverte vers l'ouverture (8), dont la face supérieure présente des traversées (22), **en ce que** la coiffe (12) solidaire de l'appareil comprend un siège de valve annulaire (15) contre lequel s'appuie avec étanchement la coiffe mobile (16, 18) dans sa position soulevée, **en ce que** la coiffe (12) solidaire de l'appareil est reliée à la source d'air externe à l'intérieur du siège de valve (15), et **en ce que** les traversées (22) sont ménagées dans la face supérieure (17) de la coiffe mobile (16) à l'extérieur du siège de valve (15).

8. Appareil aspirateur selon la revendication 7, **caractérisé en ce que** dans sa position de fermeture la coiffe mobile (16) laisse libre un intervalle (24) entre son bord inférieur (23) et le récipient de collecte (2) et elle referme cet intervalle (24) dans sa position d'ouverture, et **en ce que** l'espace (7) entourant la coiffe mobile (16) communique avec le canal d'aspiration.

9. Appareil aspirateur selon l'une ou l'autre des revendications 7 et 8, **caractérisé en ce que** la monture magnétique (20, 21) est agencée dans un intervalle entre la coiffe (12) solidaire de l'appareil et la coiffe mobile (16).

10. Appareil aspirateur selon l'une des revendications précédentes, **caractérisé en ce que** le filtre (5) est un filtre plissé.
